# EUROPEAN PATENT SPECIFICATION

(11) **EP 1 195 528 B1**
(45) Date of publication and mention of the grant of the patent: **13.07.2005**
(21) Application number: 01307928.0
(22) Date of filing: 18.09.2001
(51) Int. Cl.: F15B 13/043, F15B 13/04

(54) **Selector valve with magnetometric sensor**
Wegeventil mit Magnetsensor
Distributeur à voies multiples avec capteur magnétique

(30) Priority: 06.10.2000 JP 2000307794
(43) Date of publication of application: 10.04.2002
(73) Proprietor: SMC CORPORATION, Minato-ku, Tokyo (JP)
(72) Inventor: Miyazoe, Shinji, Yawara-mura, Tsukuba-gun, Ibaraki (JP); Ishikawa, Makoto, Yawara-mura, Tsukuba-gun, Ibaraki (JP)
(74) Representative: Findlay, Alice Rosemary

(56) References cited:
- EP-A- 0 844 425
- WO-A-92/16756
- JP-U- 2 066 784
- US-A- 5 819 783

## Description

The present invention relates to a selector valve with a magnetometric sensor for detecting an operating position of a spool.

A known selector valve with a magnetometric sensor in which switching of the spool can be detected by providing a magnet and the magnetometric sensor is disclosed in Japanese Utility Model Application Laid-open No. 2-66784. This known selector valve is formed by mounting the magnet to an outer periphery of the spool and mounting the magnetometric sensor to a casing. When the spool moves to one switching position, the magnet approaches the magnetometric sensor and the magnetometric sensor is turned on. When the spool moves to the other switching position, the magnet is separated from the magnetometric sensor and the magnetometric sensor is turned off.

Switching of the spool is detected by turning on and off of the magnetometric sensor.

The magnet is mounted to a central portion of the spool which slides in a valve hole and the magnetometric sensor is mounted to a central portion of the casing in a position corresponding to that of the magnet. However, this means a special spool and casing with complicated structures different from those of selector valves without a magnetometric sensor have to be used. In the case of the casing, because a plurality of ports, a plurality of flow paths connecting the ports and the valve hole, and/or a plurality of pilot flow paths are normally provided in a complicated pattern, it is extremely difficult in terms of design to newly provide a mounting hole for the magnetometric sensor, an introducing hole for wiring, and the like while preventing them from interfering with the ports and flow paths. In order to simplify the structure, it is preferable to use as many parts as possible in common with standard selector valves without a magnetometric sensor. It is especially desirable to use a common casing.

Furthermore, in order to precisely control operation of the selector valve and to predict a failure, it is preferable to detect not only if the spool has reached a stroke end but also every operating position of the spool by using the magnet and the magnetometric sensor.

EP-A-0844425 discloses a selector valve which comprises a casing having a plurality of ports and a valve hole into which the ports open, a spool for sliding in the valve hole and having one end outside of the valve hole, end blocks on opposite sides of the casing, driving means for driving the spool, a magnet mounted to part of said one end of the spool so as to move with the spool outside the valve hole, a detecting block disposed between the casing and one of said end blocks so as to surround the magnet, and at least one magnetometric sensor mounted to the detecting block so as to detect magnetism from the magnet.

According to the present invention, the detecting block includes a first portion sandwiched between the casing and the end block to surround the area in which the magnet moves and a second portion positioned along an outer face of the selector valve astride the first portion and the end block, a sensor mounting groove is formed in the second portion in parallel with an axis of the spool and astride the moving area of the magnet, and the magnetometric sensor is fitted in the sensor mounting groove.

With a selector valve having the above structure, by disposing the detecting block between the casing and the end block, mounting the magnetometric sensor to the detecting block, causing the end portion of the spool to extend into the detecting block, and mounting the magnet to the end portion, it is unnecessary to provide a casing of complicated structure or subject it to any special processing and it is possible to easily form the selector valve using the casing of a normal selector valve simply by providing a detecting block and making few improvements to the spool.

It is preferable that the magnetometric sensor is mounted in the sensor mounting groove so as to be able to detect the magnetism from the magnet throughout a stroke of the spool and that every operating position of the spool can be detected from a change in magnetic flux density due to movement of the magnet.

Because not only positions of the spool at the stroke ends but also any position within the stroke can be detected, it is possible to easily judge using a judging circuit if the spool has operated normally from the relationship between the positions and operating times of the spool from start to finish of the stroke. Thus, it is possible to take preventive measures before a failure occurs and so to prevent suspension of operation of an operating system for many hours due to the failure and consequent accident.

In a preferred embodiment, the driving means is a solenoid-operated pilot valve, the spool is switched by one or two pilot valve(s), the pilot valve(s) being mounted to one of the end blocks, and the magnet and the magnetometric sensor being provided on a side of the end blocks other than that to which the pilot valve(s) is mounted.

The selector valve is capable of being formed easily using the same casing as a normal selector valve without a magnetometric sensor, the structure of the selector valve is simple, and the selector valve can be produced easily.

Furthermore, the operating position of the spool can be detected throughout a stroke.

The invention will now be described by way of example with reference to the accompanying drawings in which:

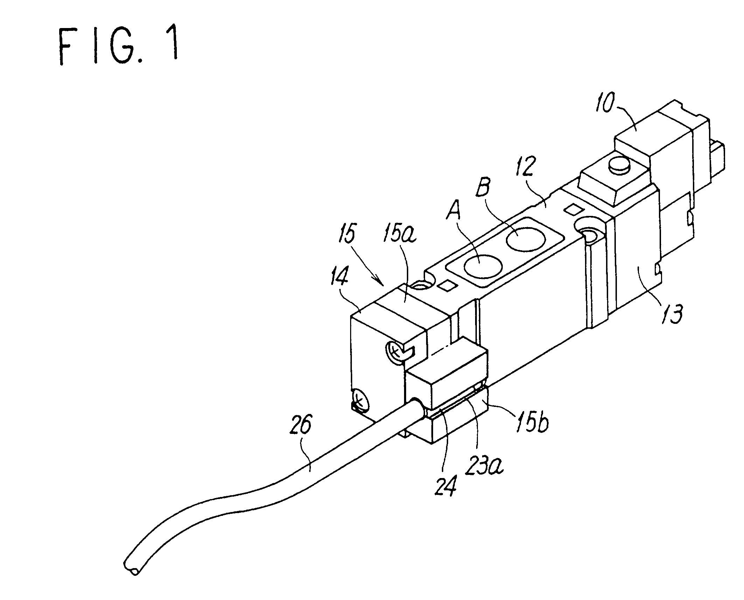

Fig. 1 is a perspective view of an embodiment of a selector valve according to the present invention.

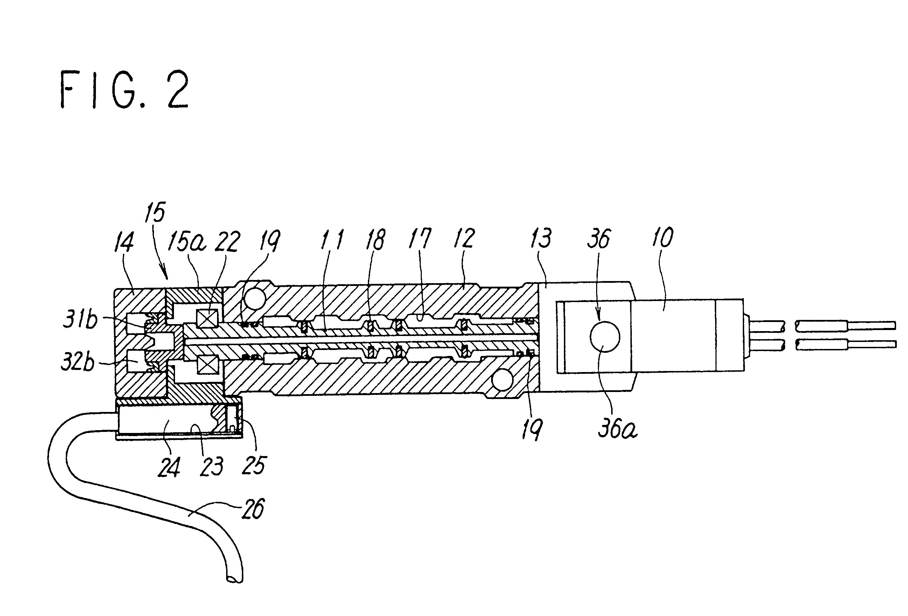

Fig. 2 is a cross-sectional plan view of a central portion of the selector valve in Fig. 1.
Fig. 3 is a vertical sectional side view of the central portion of the selector valve in Fig. 1.

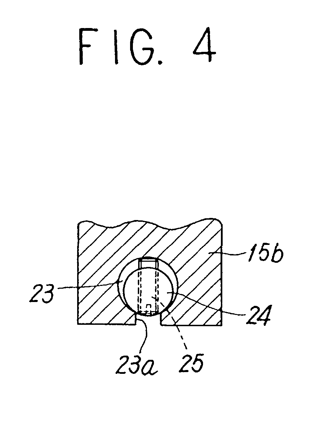

Fig. 4 is an enlarged sectional view of an essential portion of Fig. 2.

The drawings show a preferable embodiment of a selector valve with a magnetometric sensor according to the present invention. The selector valve shown here as an example is a single-pilot-type selector valve in which a spool 11 is switched by using one solenoid-operated pilot valve 10.

The selector valve includes a casing 12 made of non-magnetic material and substantially in a shape of a rectangular parallelepiped and end blocks 13 and 14 made of non-magnetic material, having rectangular sectional shapes, and mounted to axial opposite sides of the casing 12. The pilot valve 10 is mounted to the one, first end block 13 and a detecting block 15 made of non-magnetic material is disposed between the other, second end block 14 and the casing 12.

A supply port P and two discharge ports EA and EB are provided to one of upper and lower faces of the casing 12 and two output ports A and B are provided to the other face. A valve hole 17 into which the respective ports open side by side in an axial direction is provided in the casing 12. The spool 11 for switching flow paths and made of non-magnetic material is housed for sliding in its axial direction in the valve hole 17.

A plurality of sealing members 18 for connecting and separating flow paths connecting the respective ports to and from each other are provided to an outer periphery of the spool 11 and end portion sealing members 19 for separating breathing chambers 20a and 20b which respective end portions of the spool 11 face and the flow paths in the valve hole 7 from each other are provided respectively to outer peripheries of opposite end portions of the spool 11. One end of the spool 11 extends outside from the valve hole 17 and is positioned in the detecting block 15 and a magnet 22 is mounted to an outer periphery of the extending portion of the spool 11 so as to move with the spool 11 outside the valve hole 17.

This magnet 22 is formed by mixing metal powder having a magnetic property into a soft elastic base material such as synthetic resin and synthetic rubber in a ring shape having a notch at a portion of a circumference. The magnet 22 is mounted to the above position by fitting the magnet in a mounting groove formed in the outer periphery of the end portion of the spool 11 while elastically expanding a diameter of the magnet 22. It is also possible to fit two hard semicircular magnet pieces in the mounting groove such that the pieces are arranged in a ring shape.

The magnet 22 mounted to the spool 11 in the breathing chamber 20a outside the valve hole 17 is separated from working fluid. Therefore, if moisture, chemical mist, particles of magnetic material such as metal powder, and the like are included in the working fluid, the magnet 22 does not rust or corrode in contact with the moisture and chemical mist and does not adsorb the particles of magnetic material. As a result, reduction of accuracy of position detection due to reduction of a function of the magnet 22 and an inoperable state of the spool 11 due to the adsorbed minute particles do not occur.

On the other hand, the detecting block 15 includes a first portion 15a sandwiched between the casing 12 and the second end block 14 and having a rectangular sectional shape to surround an area where the magnet 22 moves and a second portion 15b positioned astride the first portion 15a and the second end block 14 along an outer face of the selector valve. A sensor mounting groove 23 having a groove inside wider than an opening portion 23a is formed in the second portion 15b astride the moving area of the magnet 22 in parallel with an axis of the spool 11 and the magnetometric sensor 24 is fitted in the sensor mounting groove 23. The first portion 15a and the second portion 15b may be formed integrally or may be formed separately and connected to each other.

The magnetometric sensor 24 is lifted toward the opening portion 23a and pressed against and fixed to an inner face of the opening portion 23a by screwing a setscrew 25 down into a screw hole formed in the magnetometric sensor 24 and fastening the setscrew 25 to bring a screw tip end into contact with a groove bottom of the mounting groove 23. In this manner, the magnetometric sensor 24 is mounted so as to be able to detect an operating position of the spool 11 throughout a stroke from a change in magnetic flux density due to movement of the magnet 22. In this case, if the operating position of the spool 11 throughout the stroke cannot be detected by using one magnetometric sensor, two magnetometric sensors may be mounted in positions displaced from each other in the sensor mounting groove 23. It is also possible to mount two magnetometric sensors having sensor functions in one sensor body.

The magnetometric sensor 24 is connected to a judging circuit of a controller (not shown) through a lead 26 and outputs a detection signal corresponding to magnetic flux density to this judging circuit. In this judging circuit, data necessary for position detection such as respective interrelationships between each operating position and magnetic flux density, operating time, and fluid pressure when the spool 11 operates normally is input in advance. If the detection signal from the magnetometric sensor 24 is input, positions of opposite stroke ends and respective positions in the stroke of the spool 11 are measured based on the data and used for control. From a relationship between the positions and the operating time of the spool 11 from start to finish of the stroke, it can also be possible to judge if the operation of the spool 11 is normal. Thus, it is possible to detect a sign of a failure in advance and to take preventive measures. As a result, it is possible to prevent suspension of operation of the device for many hours due to generation of the failure, an accident, and the like.

Piston chambers 30a, 30b are formed respectively in the first end block 13 and the second end block 14. The first piston chamber 30a formed in the first end block 13 has a large diameter and a large-diameter first piston 31a is housed for sliding in the first piston chamber 30a. The second piston chamber 30b formed in the second end block 14 has a smaller diameter and a small-diameter second piston 31b is housed for sliding in the second piston chamber 30b. These pistons 31a and 31b are respectively in contact with end faces of the spool 11. A first pressure chamber 32a and a second pressure chamber 32b are respectively formed on back face sides of the respective pistons 31a and 31b, i.e., on opposite sides to the faces in contact with the spool 11. Between the respective pistons 31a, 31b and the end faces of the spool 11, breathing chambers 20a and 20b opening to an outside are formed respectively. The pressure chambers 32a and 32b are airtightly separated from the breathing chambers 20a and 20b with piston packing 33 mounted to outer peripheries of the pistons 31a and 31b.

The first pressure chamber 32a on a side of the large-diameter first piston chamber 30a communicates with the supply port P through a pilot flow path 35 extending in the casing 12 and the first end block 13 through the pilot valve 10 and a manual operation mechanism 36. The second pressure chamber 32b on a side of the small-diameter second piston 31b constantly communicates with the supply port P through a pilot flow path 37 extending from the casing 12 in the detecting block 15 and the second end block 14.

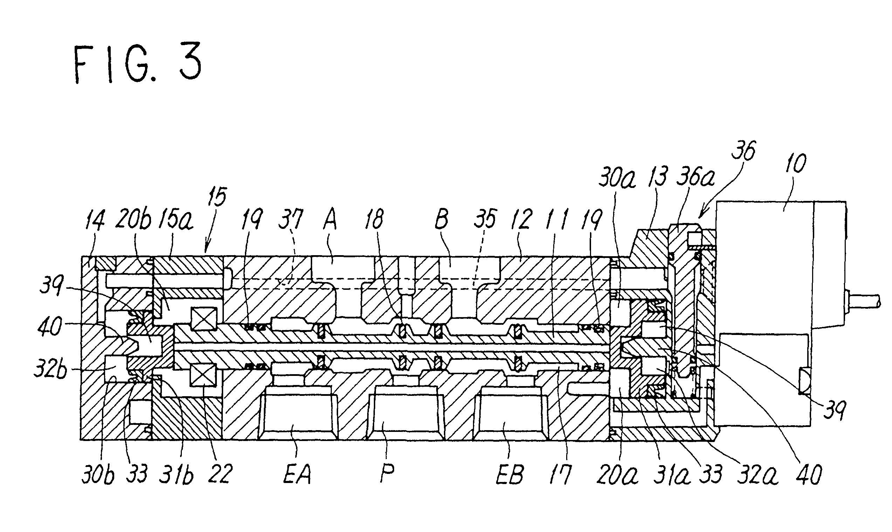

In FIG. 3, reference numerals 39 designates guide holes formed in the axial direction in central portions of pressure receiving faces of the respective pistons 31a and 31b and reference numerals 40 designate guides projecting from chamber walls of the pressure chambers 32a and 32b in the respective end blocks 13 and 14 to be fitted in the guide holes 39 for guiding the pistons 31a and 31b such that the pistons 31a and 31b operate stably.

When the pilot valve 10 is in an off state and pilot fluid is not supplied to the first pressure chamber 32a, the second piston 31b is pushed with pilot fluid pressure supplied to the second pressure chamber 32b. Therefore, the spool 11 is in a first switching position which is displaced rightward as shown in FIG. 3. If the pilot valve 10 is switched to an on state and the pilot fluid is supplied to the first pressure chamber 32a from this state, because a fluid pressure operating force acting on the first piston chamber 30a is larger than that acting on the second piston 31b due to a difference between pressure receiving areas of the two pistons 31a and 31b, the spool 11 is pushed with the first piston chamber 30a and moves leftward to occupy a second switching position.

A switching operation of the spool 11 is detected throughout the stroke by detecting magnetic flux of the magnet 22 moving with the spool 11 by using the magnetometric sensor 24. The detection signal is input to the judging circuit and used for control of the selector valve and other associated devices and prediction of the failure of the selector valve.

The manual operation mechanism 36 is for directly connecting the pilot flow path and the first pressure chamber 32a by pushing down an operation member 36a. A switching state similar to the case in which the pilot valve 10 is turned on is obtained manually.

The pilot valve 10 is the solenoid-operated pilot valve for opening and closing the pilot flow path by energization of a solenoid. Because a structure and operation of the pilot valve 10 are similar to those of known pilot valves, concrete descriptions of them will be omitted.

As described above, by disposing the detecting block 15 between the casing 12 and the end block 14, mounting the magnetometric sensor 24 to the detecting block 15, causing the end portion of the spool 11 to extend into the detecting block 15, and mounting the magnet 22 to the extending position, as compared with a normal selector valve without the magnetometric sensor 24, it is unnecessary to subject the casing 12 having a complicated structure to any special processing and it is possible to easily form the selector valve with the magnetometric sensor by using the casing 12 in common with the normal selector valve by only and newly preparing the detecting block 15 and making few improvements to the spool 11.

Although the second portion 15b of the detecting block 15 is provided to the side face of the selector valve in the above embodiment, the second portion 15b may be disposed on an upper face or a lower face of the selector valve.

Although the detecting block 15, the magnet 22, and the magnetometric sensor 24 are provided on a side of the second end block 14 where the pilot valve 10 is not mounted, they may be provided on a side of the first end block 13 where the pilot valve 10 is mounted.

The type of the selector valve is not limited to the single-pilot type as described in the embodiment but may be a double-pilot-type selector valve having two pilot valves 10 or may be a direct-acting selector valve in which the spool 11 is directly driven by electromagnetic or mechanical driving means.

If the selector valve is a three-position selector valve having three switching positions, the magnet and the magnetometric sensor are preferable disposed such that all the three switching positions can be detected .

As described above in detail, the selector valve can be formed easily using the same casing as a normal selector valve without a magnetometric sensor, the structure of the selector valve is simple, and the selector valve can be produced easily.

## Claims

1. A selector valve comprising a casing (12) having a plurality of ports and a valve hole (17) into which the ports open, a spool (11) for sliding in the valve hole (17), end blocks (13, 14) on opposite sides of the casing, a piston (31a, 31 b) mounted in each end block for driving the spool, a detecting block (15) disposed between the casing (12) and one of said end blocks (13, 14), the spool (11) having one end outside of the valve hole (17) and within the detecting block (15), a magnet (22) mounted to part of said one end of the spool so as to move with the spool (11) outside the valve hole (17) and within the detecting block (15) whereby the detecting block (15) surrounds the magnet (22), and at least one magnetometric sensor (24) mounted to the detecting block (15) so as to detect magnetism from the magnet, **characterised in that** the detecting block includes a first portion (15a) sandwiched between the casing (12) and the end block (14) and surrounding an area in which the magnet (22) moves and a second portion (15b) positioned along an outer face of said selector valve beside the first portion and the end block; **in that** a sensor mounting groove (23) is formed in the second portion (15b) parallel with an axis of the spool and beside the area in which the magnet (22) moves, and **in that** the magnetometric sensor (24) is fitted in the sensor mounting groove (23).

2. A selector valve as claimed in claim 1, wherein the magnetometric sensor (24) is mounted in the sensor mounting groove (23) so as to detect magnetism from the magnet throughout a stroke of the spool (11) whereby every operating position of the spool can be detected from the change in magnetic flux density due to movement of the magnet (22).

3. A selector valve as claimed in any preceding claim, wherein the driving means is a solenoid-operated pilot valve (10), the spool (11) is switched by one or two pilot valve(s) (10), the or each pilot valve (10) is mounted to one of the end blocks (13), and the magnet (22) and the magnetometric sensor (24) are provided on a side of the end block (14) other than one to which the pilot valve(s) (10) is mounted.

## Patentansprüche

1. Wegeventil mit einem Gehäuse (12), das mehrere Anschlüsse und ein Ventilloch (17) aufweist, in das sich die Anschlüsse öffnen, einem Schieber (11) zur Verschiebung im Ventilloch (17), Endblöcken (13, 14) auf gegenüberliegenden Seiten des Gehäuses, einem Kolben (31 a, 31 b), der in jedem Endblock zum Antreiben des Schiebers angebracht ist, einem Detektionsblock (15), der zwischen dem Gehäuse (12) und einem der Endblöcke (13, 14) angeordnet ist, wobei der Schieber (11) ein Ende außerhalb des Ventillochs (17) und innerhalb des Detektionsblocks (15) aufweist, einem Magneten (22), der an einem Teil des einen Endes des Schiebers so angebracht ist, dass er sich mit dem Schieber (11) außerhalb des Ventillochs (17) und innerhalb des Detektionsblocks (15) bewegt, wodurch der Detektionsblock (15) den Magneten (22) umgibt, und mindestens einem Magnetsensor (24), der am Detektionsblock (15) angebracht ist, um den Magnetismus des Magneten zu detektieren, **dadurch gekennzeichnet, dass** der Detektionsblock einen ersten Abschnitt (15a), der zwischen dem Gehäuse (12) und dem Endblock (14) angeordnet ist und einen Bereich umgibt, in dem sich der Magnet (22) bewegt, und einen zweiten Abschnitt (15b) aufweist, der längs einer Außenfläche des Wegeventils neben dem ersten Abschnitt und dem Endblock angeordnet ist; dass eine Sensorbefestigungsnut (23) im zweiten Abschnitt (15b) parallel mit einer Achse des Schiebers und neben dem Bereich ausgebildet ist, in dem sich der Magnet (22) bewegt, und dass der Magnetsensor (24) in die Sensorbefestigungsnut (23) eingepaßt ist.

2. Wegeventil nach Anspruch 1, wobei der Magnetsensor (24) in der Sensorbefestigungsnut (23) angebracht ist, um den Magnetismus des Magneten über einen gesamten Hub des Schiebers (11) zu detektieren, wodurch jede Betriebsposition des Schiebers aus der Änderung der magnetischen Flußdichte infolge der Bewegung des Magneten (22) detektiert werden kann.

3. Wegeventil nach einem der vorhergehenden Ansprüche, wobei die Antriebseinrichtung ein elektromagnetisch betätigtes Vorsteuerventil (10) ist, der Schieber (11) durch ein oder zwei Vorsteuerventil(e) (10) umgeschaltet wird, das oder jedes Vorsteuerventil (10) an einem der Endblöcke (13) angebracht ist, und der Magnet (22) und der Magnetsensor (24) auf einer anderen Seite des Endblocks (14) als der vorgesehen sind, an der das Vorsteuerventil(e) (10) angebracht ist.

## Revendications

1. Distributeur à voies multiples comportant un boîtier (12) ayant une pluralité d'orifices et un trou de valve (17) dans lequel les orifices s'ouvrent, un tiroir (11) destiné à coulisser dans le trou de valve (17), des blocs d'extrémité (13, 14) des côtés opposés du boîtier, un piston (31a, 31b) monté dans chaque bloc d'extrémité pour entraîner le tiroir, un bloc de détection (15) disposé entre le boîtier (12) et l'un desdits blocs d'extrémité (13, 14), le tiroir (11) ayant une extrémité hors du trou de valve (17) et à l'intérieur du bloc de détection (15), un aimant (22) monté sur une partie de ladite une extrémité du tiroir de telle manière à se déplacer avec le tiroir (11) à l'extérieur du trou de valve (17) et à l'intérieur du bloc de détection (15) ce par quoi le bloc de détection (15) entoure l'aimant (22), et au moins un capteur magnétométrique (24) monté sur le bloc de détection (15) de telle manière à détecter le magnétisme provenant de l'aimant, **caractérisé en ce que** le bloc de détection comprend une première portion (15a) pnse en sandwich entre le boîtier (12) et le bloc d'extrémité (14) et entourant une zone dans laquelle l'aimant (22) se déplace et une deuxième portion (15b) située le long d'une surface extérieure dudit distributeur à voies multiples à côté de la première portion et du bloc d'extrémité ; **en ce qu'**une rainure de montage pour capteur (23) est formée dans la deuxième portion (15b) de manière parallèle à un axe du tiroir et à côté de la zone dans laquelle l'aimant (22) se déplace, et **en ce que** le capteur magnétométrique (24) est installé dans la rainure de montage pour capteur (23).

2. Distributeur à voies multiples selon la revendication 1, dans lequel le capteur magnétométrique (24) est monté dans la rainure de montage pour capteur (23) de telle manière à détecter le magnétisme provenant de l'aimant tout au long d'une course du tiroir (11) ce par quoi chaque position de fonctionnement du tiroir peut être détectée en fonction du changement de la densité de flux magnétique, changement dû au mouvement de l'aimant (22).

3. Distributeur à voies multiples selon l'une quelconque des revendications précédentes, dans lequel le moyen d'entraînement est un distributeur pilote à commande par électro-aimant (10), le tiroir (11) est commuté par un ou deux distributeurs pilotes (10), le ou chaque distributeur pilote (10) est monté sur l'un des blocs d'extrémité (13), et l'aimant (22) et le capteur magnétométrique (24) sont mis en oeuvre sur un côté du bloc d'extrémité (14) plutôt que sur l'un où le distributeur pilote (10) est monté.
